## Europäisches Patentamt

## European Patent Office

## Office européen des brevets

(11) Veröffentlichungsnummer: **0 438 632 A2**

# EUROPÄISCHE PATENTANMELDUNG

(21) Anmeldenummer: 90115769.3

(22) Anmeldetag: 17.08.90

(51) Int. Cl.⁵: **H01C 1/144**, H01G 1/14

(30) Priorität: 25.01.90 DE 4002071

(43) Veröffentlichungstag der Anmeldung:
31.07.91 Patentblatt 91/31

(84) Benannte Vertragsstaaten:
**DE FR GB IT NL**

(71) Anmelder: **DEGUSSA AG**
**Weissfrauenstrasse 9**
**W-6000 Frankfurt (Main)(DE)**

(72) Erfinder: **Platen, Wolfgang, Dr.**
**Fürstenbergstrasse 8**
**W-6450 Hanau 9(DE)**

(54) **Kontaktfläche an elektrischen Bauelementen zur Befestigung von Anschlussdrähten.**

(57) Um das Abreißen der Anschlußdrähte auf Kontaktflächen aus Metallschichten an elektrischen Bauelementen zu erschweren, wird diese außerhalb der eigentlichen Kontaktzone im Bereich einer ungewollten Kontaktzone durch Trennschnitte strukturiert. Dadurch können Risse in der Metallschicht nicht unbegrenzt weiterlaufen, sondern müssen stets neu eingeleitet werden.

EP 0 438 632 A2

## KONTAKTFLÄCHE AN ELEKTRISCHEN BAUELEMENTEN ZUR BEFESTIGUNG VON ANSCHLUSSDRÄHTEN

Die Erfindung betrifft Kontaktflächen aus Metallschichten an elektrischen Bauelementen, wie Widerständen oder Kondensatoren, zur Befestigung von Anschlußdrähten, die in einer begrenzten Kontaktzone mit der Metallschicht des Bauelements materiell verbunden sind.

Bei der Verdrahtung von elektrischen Bauelementen, wie Widerständen oder Kondensatoren, werden Verfahren eingesetzt, bei denen die aus Metallschichten bestehenden Kontaktflächen und die Anschlußdrähte einer thermischen Belastung ausgesetzt werden. Ein solches Verfahren ist z.B. das Thermokompressionsschweißen. Die mechanische und damit elektrische Verbindungsstelle (Kontaktzone) zwischen Anschlußdraht und Kontaktfläche entspricht nicht immer der vollständigen möglichen Fläche unter dem Kontakt. Zusätzlich dazu ist es bei flach von der Kontaktfläche fortgeführten Anschlußdrähten möglich, daß in einer Zone, die nicht angedrückt wurde, eine mechanisch feste Verbindung zur darunterliegenden Kontaktfläche ausgebildet wird. Diese ungewollte Kontaktzone ist üblicherweise keilförmig. Bei der Belastung der Anschlußdrähte mit einer Zugspannung, die senkrecht zur Kontaktfläche aufgebracht wird, können ungleichmäßig ausgeprägte Haftungsbereiche zwischen Kontaktfläche und Anschlußdrähten zur Einleitung von Rissen in der Kontaktfläche führen. Besonders leicht bilden sich solche Risse in der ungewollten, keilförmigen Kontaktzone.

Es war daher Aufgabe der vorliegenden Erfindung, Kontaktflächen aus Metallschichten an elektrischen Bauelementen, wie Widerständen oder Kondensatoren, zur Befestigung von Anschlußdrähten, die in einer begrenzten Kontaktzone mit der Metallschicht des Bauelements materiell verbunden sind, so auszugestalten, daß eine Rißbildung in der Metallschicht bei Anlegung einer Zugspannung an die Anschlußdrähte möglichst erschwert und das Abreißen der Anschlußdrähte verhindert wird.

Diese Aufgabe wird erfindungsgemäß dadurch gelöst, daß der Bereich der Kontaktfläche der außerhalb der eigentlichen Kontaktzone zwischen Anschlußdrähten und Metallschicht und innerhalb einer ungewollten Kontaktzone liegt, durch nichtleitende Bereiche in mehrere Teilbereiche aufgeteilt ist.

Vorteilhafterweise liegen die Hauptachsen der Teilbereiche senkrecht zur Anschlußdrahtachse.

Weiterhin ist es vorteilhaft, wenn die Teilbereiche durch Schnitte voneinander getrennt sind, insbesondere durch Ätzschritte.

Durch die Strukturierung der Kontaktfläche außerhalb der direkten Kontaktzone, auf der eine ungewollte Kontaktierung zwischen Anschlußdraht und Metallschicht vorliegt, in mehrere Teilflächen, ist es möglich, die Neigung zu einer Rißeinleitung zu verringern. Außerdem wird dadurch erreicht, daß eingeleitete Risse nicht unbegrenzt weiterlaufen können, sondern wiederholt neu eingeleitet werden müssen. Dieser Vorgang verbraucht Energie, hemmt also die Rißbildung.

Die Schnitte bzw. Hauptachsen der Teilbereiche der Kontaktfläche können auch parallel zur Drahtachse liegen bzw. als Punktmuster ausgeführt sein.

Diese strukturierte Kontaktfläche ist einsetzbar bei allen elektrischen Bauelementen, wie Widerständen oder Kondensatoren. Die Metallschicht kann aus den üblicherweise für Kontaktfläche verwendeten Materialien, wie Platin oder Nickel bestehen und in Dünn- oder Dickschichttechnik hergestellt sein oder aus Folien bestehen. Die Strukturierung kann beispielsweise mittels Lasertechnik, Trocken- oder Naßätzen erfolgen.

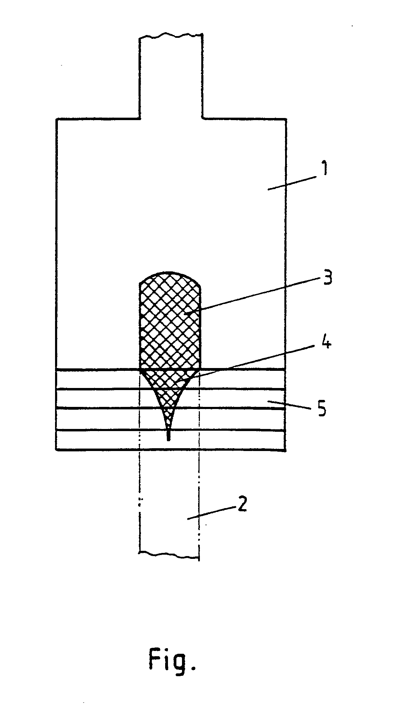

Die Abbildung zeigt schematisch eine erfindungsgemäße strukturierte Kontaktfläche in Aufsicht. Auf der Kontaktfläche (1) ist ein Anschlußdraht (2) aufgebracht, der in der eigentlichen Kontaktzone (3) die materielle elektrische Verbindung herstellt. Außerhalb dieser eigentlichen Kontaktzone (3) besteht eine ungewollte keilförmige Kontaktzone (4), wie sie häufig beim Thermokompressionsschweißen auftritt. In diesem Bereich ist die Kontaktfläche (1) durch Trennschnitte senkrecht zur Drahtachse in getrennte Teilbereiche (5) aufgeteilt.

**Patentansprüche**

1. Kontaktflächen aus Metallschichten an elektrischen Bauelementen, wie Widerständen oder Kondensatoren, zur Befestigung von Anschlußdrähten, die in einer begrenzten Kontaktzone mit der Metallschicht des Bauelements materiell verbunden sind,
dadurch gekennzeichnet,
daß der Bereich der Kontaktfläche (1), der außerhalb der eigentlichen Kontaktzone (3) zwischen Anschlußdrähten (2) und Metallschicht und innerhalb einer ungewollten Kontaktzone (4) liegt, durch nicht leitende Bereiche in mehrere Teilbereiche (5) aufgeteilt ist.

2. Kontaktflächen nach Anspruch 1,
dadurch gekennzeichnet,
daß die Hauptachsen der Teilbereiche (5) senkrecht zur Anschlußdrahtachse liegen.

3. Kontaktflächen nach Anspruch 1 und 2,
dadurch gekennzeichnet,

daß die Teilbereiche (5) durch Schnitte voneinander getrennt sind.

Fig.